# FASCICULE DE BREVET EUROPEEN

(11) **EP 2 083 740 B1**
(45) Date de publication et mention de la délivrance du brevet: **24.10.2018**
(21) Numéro de dépôt: 07870237.0
(22) Date de dépôt: 02.11.2007
(51) Int. Cl.: A61C 1/16, A61C 17/02

(54) **ENSEMBLE DE PROTECTION POUR SERINGUE**
SCHUTZANORDNUNG FÜR EINE SPRITZE
PROTECTION ASSEMBLY FOR A SYRINGE

(30) Priorité: 03.11.2006 FR 0609614
(43) Date de publication de la demande: 05.08.2009
(73) Titulaire: Produits Dentaires Pierre Rolland, 33700 Merignac (FR)
(72) Inventeur: SAUROU, Sabrina, 75116 Paris (FR)
(74) Mandataire: Desormiere, Pierre-Louis
(86) Numéro de dépôt international: PCT/FR2007/001817
(87) Numéro de publication internationale: WO 2008/065269

(56) Documents cités:
- EP-A- 1 632 196
- WO-A1-00/39003
- US-A- 4 810 194
- US-A- 4 998 880
- US-A- 5 807 107
- US-A- 5 921 776
- US-A1- 2002 123 663
- US-B1- 6 179 159

## Description

La présente invention concerne un ensemble de protection pour une seringue.

Par seringue, on entend un appareil utilisé notamment en art dentaire pour pulvériser à haute pression un fluide tel que par exemple de l'air et/ou de l'eau sur une zone dentaire traitée.

On sait que des précautions doivent être prises pour éviter qu'une seringue ne soit contaminée par un patient ou ne contamine un patient avec une maladie contagieuse, notamment par la diffusion de virus tels que ceux de l'hépatite ou du syndrome immuno-déficitaire acquis (SIDA).

Une manière de se prémunir contre une telle contamination consiste à stériliser la seringue avant chaque utilisation. Cette mesure n'est cependant pas toujours possible compte tenu de la taille ou de la géométrie des seringues. Ainsi, une autre manière de se prémunir d'une contamination consiste à utiliser un ensemble de protection jetable.

On a représenté sur la figure 1 un ensemble de protection pour une seringue selon le document US-4 998 880.

Cet ensemble de protection comprend une canule 2 jetable dont une base 4 est destinée à être fixée sur une seringue, généralement par l'intermédiaire d'un adaptateur. L'ensemble de protection comprend également une gaine 6 formée d'un film souple enroulé sur lui-même à proximité de la base 4. Pour utiliser cet ensemble de protection, le praticien fixe la canule 2 sur une seringue et déroule la gaine 6 qui vient ainsi recouvrir le corps de seringue.

Le demandeur a constaté que cet ensemble de protection n'était pas d'un usage pratique. D'une part, le stockage d'une pluralité d'ensembles de protection est rendu délicat car les gaines enroulées ont tendance à s'accrocher entre elles. D'autre part, la mise en place de la gaine sur le corps de seringue est malaisée, le praticien tenant d'une main le corps de seringue ne disposant que d'une seule main pour dérouler la gaine.

Il en résulte que l'ensemble de protection selon l'art antérieur n'est pas satisfaisant pour le praticien.

Le document US 5,921,776 divulgue un ensemble de protection pour seringue dentaire selon le préambule de la revendication 1.

L'invention a pour but de remédier aux inconvénients des ensembles de protection connus.

A cette fin, l'invention a pour objet un ensemble de protection pour seringue, notamment dentaire, comprenant un corps de seringue, ledit ensemble de protection comprenant :
- une canule en un matériau élastiquement rigide comportant une base destinée à être fixée sur le corps de seringue, et
- une gaine en matériau souple destinée à recouvrir de manière lâche ledit corps de seringue,
ladite gaine étant fixée à ladite canule à proximité de ladite base, ladite fixation étant irréversible, caractérisé en ce que la gaine est formée de deux parois parallèles planes et en ce que la canule comporte deux canaux destinés à la pulvérisation de fluides et une marque de référence pour faciliter l'orientation des canaux de ladite canule par rapport à ceux de la seringue.

Par fixation irréversible, on entend que la gaine et la canule ne peuvent pas être séparées l'une de l'autre, sauf à détruire de manière irrémédiable l'ensemble de protection.

Selon un mode de réalisation préféré, la gaine présente, à son extrémité opposée à celle fixée à la canule, une zone définie par une ligne de prédécoupage.

De manière avantageuse, ladite zone est pourvue d'un orifice.

D'autres caractéristiques et avantages de l'invention apparaîtront à la lecture de la description qui suit d'un mode de réalisation, donné à titre illustratif mais non limitatif, en référence aux dessins annexés, sur lesquels :
La figure 1, déjà décrite, illustre un ensemble de protection pour seringue selon l'état de la technique,
La figure 2 illustre un ensemble de protection pour seringue selon l'invention, et
La figure 3 illustre l'ensemble de protection de la figure 2 après sa mise en place sur une seringue.

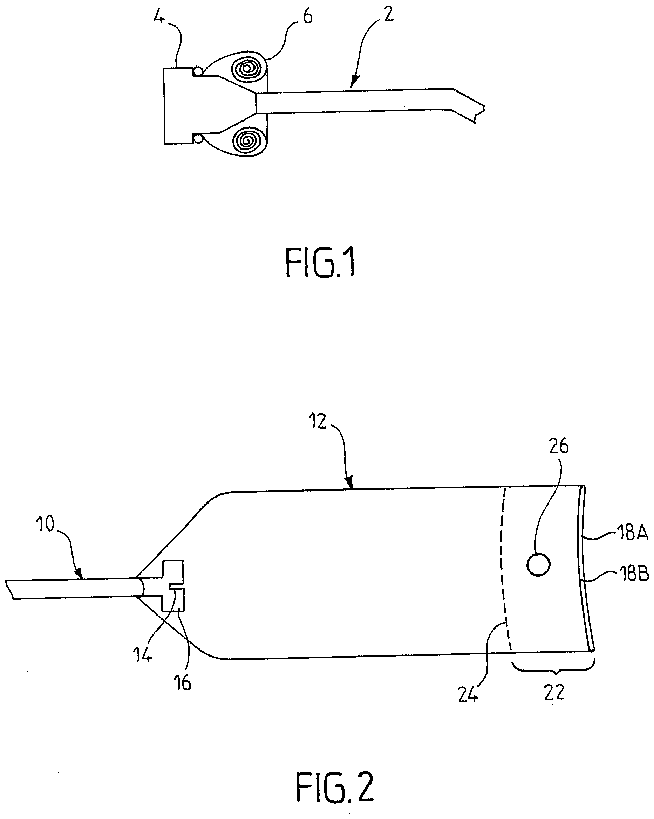

On a représenté sur la figure 2 un mode de réalisation d'un ensemble de protection selon l'invention. Cet ensemble de protection comprend une canule 10 et une gaine 12.

La canule 10 a une forme générale cylindrique, dont la section peut être notamment circulaire, ellipsoïdale, rectangulaire, etc, et comporte deux canaux (non représentés) destinés à la pulvérisation de fluides, tels que par exemple de l'air et de l'eau lorsque la canule est en position à l'extrémité d'un corps de seringue. A cette fin, la canule 10 comporte une marque de référence 14 pour faciliter l'orientation de ses canaux par rapport à ceux de la seringue par le praticien. La canule comporte également une base 16 pour permettre sa fixation, par exemple par engagement à frottement, sur le corps de seringue.

La canule est réalisée en un matériau élastiquement déformable, de sorte que le praticien peut la plier pour l'orienter selon son besoin par rapport à la zone dentaire à traiter. Le matériau de la canule est de préférence un polymère, et par exemple un polyéthylène à haute densité tel que le matériau PE HD ERACLENE MR80 dont la densité est de l'ordre de 0,954 g/cm³. De manière typique, la section droite de la canule a une surface de l'ordre de 2 à 10 mm².

La gaine 12 est destinée à recevoir le corps d'une seringue ou au moins une partie importante de celui-ci. Elle se présente, avant sa mise en place par le praticien, sous la forme d'un film souple formé de deux parois planes 18A, 18B. Elle comporte une extrémité qui est fixée à la canule 10 à proximité de sa base 16. Cette fixation peut être obtenue par tout moyen connu et en particulier par collage, soudage aux ultrasons, etc.

La gaine 12 est formée d'un matériau souple, tel qu'un polymère, et se présente sous la forme d'un film mince. A titre d'exemple, on peut choisir un polyéthylène de densité 0,905 g/cm³ sous forme de film d'épaisseur 0,1 mm.

La gaine 12 a par exemple une longueur de l'ordre de 25 cm et une largeur de l'ordre de 6 cm. Cette largeur est choisie afin que le corps de seringue puisse être introduits de manière lâche, c'est-à-dire sans frottement, dans la gaine entre les deux parois 18A et 18B.

Comme représenté sur la figure 2, l'extrémité de la gaine opposée à la canule 10 peut comprendre une zone 22 définie par une ligne de prédécoupage 24. Cette zone 22, dont la longueur est par exemple de 3 cm, peut comprendre un orifice 26.

La forme plane de la gaine avant sa mise en place sur une seringue permet un stockage optimal de l'ensemble de protection. De plus, lorsque la gaine est dotée d'une ligne de prédécoupage 24 et d'un orifice 26, une pluralité d'ensembles de protection peuvent être stockés côte-à-côte, par exemple suspendus par leur orifice 26 sur un même axe. Un praticien peut ainsi saisir facilement un ensemble de protection en tirant sur la canule de manière à déchirer la gaine suivant la zone de prédécoupage 24.

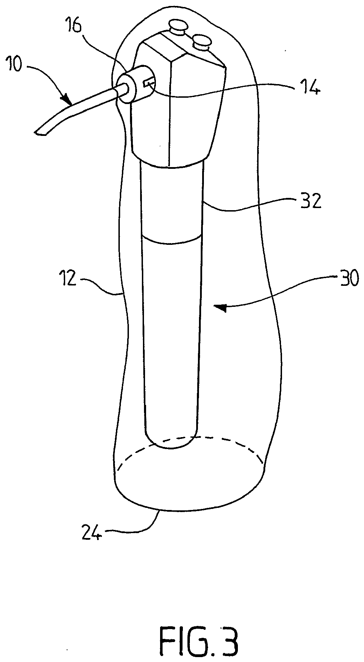

On a représenté sur la figure 3 un ensemble de protection en place sur une seringue. Sur cette figure, les éléments identiques à ceux de la figure 2 portent les mêmes références numériques.

La base 16 de la canule 10 est assujettie à un adaptateur du corps de seringue. Cette canule est déformée élastiquement par le praticien de manière à ce qu'il puisse atteindre la zone à traiter.

Dans le mode de réalisation représenté, le corps de seringue est entièrement contenu dans la gaine 12 dont le praticien a écarté les deux parois pour permettre l'introduction du corps de seringue. La largeur de la gaine est choisie suffisante pour qu'une seringue classique puisse être introduite dans la gaine de manière lâche, c'est-à-dire sans frottement.

On comprend qu'un tel ensemble de protection est plus facile à mettre en place sur une seringue que les ensembles de protection selon l'art antérieur. De même, à la fin de l'utilisation de la seringue, il est particulièrement aisé de retirer l'ensemble de protection de la seringue.

L'ensemble de protection selon l'invention permet un stockage efficace et est d'usage particulièrement simple pour le praticien. En outre, étant jetable, il permet d'éviter de contaminer la seringue.

## Revendications

1. Ensemble de protection pour seringue (30), notamment dentaire, comprenant un corps de seringue (32), ledit ensemble de protection comprenant :
- une canule (10) en un matériau élastiquement rigide comportant une base destinée (16) à être fixée sur le corps de seringue, et
- une gaine (12) en matériau souple destinée à recouvrir de manière lâche ledit corps de seringue,
ladite gaine étant fixée à ladite canule à proximité de ladite base, ladite fixation étant irréversible, **caractérisé en ce que** la gaine (12) est formée de deux parois parallèles planes (18A, 18B) et **en ce que** la canule comporte deux canaux destinés à la pulvérisation de fluides et une marque (14) de référence pour faciliter l'orientation des canaux de ladite canule par rapport à ceux de la seringue.

2. Ensemble de protection selon la revendication 1, **caractérisé en ce que** la gaine (12) présente, à son extrémité opposée à celle fixée à la canule, une zone (22) définie par une ligne de prédécoupage (24).

3. Ensemble de protection selon la revendication 2, **caractérisé en ce qu'**il comprend un orifice (26) dans ladite zone (22).

## Patentansprüche

1. Schutzanordnung für eine Spritze (30), insbesondere eine Dentalspritze, umfassend einen Spritzenkörper (32), wobei die Schutzanordnung aufweist:
- eine Kanüle (10) aus einem elastisch steifen Material, umfassend eine Basis (16), die dazu bestimmt ist, an dem Spritzenkörper befestigt zu werden, und
- eine Hülle (12) aus flexiblem Material, die dazu bestimmt ist, den Spritzenkörper locker zu bedecken,
wobei die Hülle in der Nähe der Basis an der Kanüle befestigt ist, wobei die Befestigung irreversibel ist,
**dadurch gekennzeichnet, dass**
die Hülle (12) aus zwei flachen, parallelen Wänden (18A, 18B) gebildet ist und dass
die Kanüle zwei Kanäle, die zum Sprühen von Flüssigkeiten bestimmt sind, und eine Referenzmarkierung (14) aufweist, um die Ausrichtung der Kanäle der Kanüle zu erleichtern.

2. Schutzanordnung gemäß Anspruch 1, **dadurch gekennzeichnet, dass** die Hülle (12) an ihrem Ende, das jenem gegenüberliegt, das an der Kanüle befestigt ist, einen Bereich (22) aufweist, der durch eine vorgeschnittene Linie (24) definiert ist.

3. Schutzanordnung gemäß Anspruch 2, **dadurch gekennzeichnet, dass** sie in dem Bereich (22) eine Öffnung (26) aufweist.

## Claims

1. A protection assembly for a syringe (30), in particular dental, comprising a syringe body (32), said protection assembly comprising:
- a cannula (10) made from a resiliently rigid material including a base (16) intended to be fastened on the syringe body, and
- a sheath (12) made from a flexible material intended to cover said syringe body loosely,
said sheath being fastened to said cannula near said base, said fastening being of the irreversible type,
**characterized in that** the sheath (12) is formed from two planar parallel walls (18A, 18B) and **in that** the cannula includes two channels and a reference mark (14) to facilitate the orientation of the channels of said cannula relative to those of the syringe.

2. The protection assembly according to claim 1, **characterized in that** the sheath (12) has, at its end opposite that fastened to the cannula, a zone (22) defined by a precut line (24).

3. The protection assembly according to claim 2, **characterized in that** it comprises an orifice (26) in said zone (22).
